# EUROPEAN PATENT SPECIFICATION

(11) **EP 4 047 278 B1**
(45) Date of publication and mention of the grant of the patent: **16.07.2025**
(21) Application number: 22157619.2
(22) Date of filing: 18.02.2022
(51) Int. Cl.: E03D 9/052, F24F 7/06, F24F 13/10, F24F 13/02

(54) **EXTRACTION METHOD FOR EXTRACTING ODOURS FROM A ROOM INCLUDING A WATER CLOSET**
EXTRAKTIONSVERFAHREN ZUM EXTRAHIEREN VON GERÜCHEN AUS EINEM RAUM MIT EINER TOILETTE
MÉTHODE D'EXTRACTION POUR L'EXTRACTION D'ODEURS D'UNE PIÈCE COMPRENANT UN WC

(30) Priority: 19.02.2021 IT 202100003848
(43) Date of publication of application: 24.08.2022
(73) Proprietor: R.B.M. S.p.A., 25060 Polaveno (BS) (IT)
(72) Inventor: BOSSINI, Guido, 25075 Nave (BS) (IT)
(74) Representative: Studio Torta S.p.A.

(56) References cited:
- EP-A2- 1 767 875
- DE-A1- 102005 035 117
- JP-A- 2004 045 016
- JP-A- H1 073 299
- KR-A- 20180 036 235
- US-A1- 2016 146 484

## Description

### TECHNICAL SECTOR

This invention relates to an extraction method for extraction from a room containing a water closet, such as a bathroom, a business, building, or public infrastructure toilet, etc. This invention finds its preferred application in household or hotel bathrooms, to which reference will be made below without losing generality thereby.

### PRIOR ART

An example of an extraction device is disclosed in DE102005035117A1. An example of a method of extracting odours from a room and a water closet can be seen in document JP H10 73299 A.

Room extraction systems are known, for example, for extracting odours from bathrooms. In their most widespread form, these systems comprise a ceiling or wall fan that is driven automatically, for example, via a bathroom light switch, or manually, via a dedicated switch. These extraction systems are not very effective for quickly eliminating odours since the extraction is limited to a circumscribed region near the fan.

Localised air extraction systems are also known, in which the fan is connected to the inside of the water closet, via a conduit. Although, in this case, the extraction of the odours from the water closet is more effective, other common drawbacks to the room extraction systems remain, such as the use of a dedicated fan, the noise generated by the fan itself, which is particularly annoying at night, and the discharge outside of the extracted air, without any energy recovery.

Finally, centralized extraction systems are also known, such as, for example, those used in hotels or some apartment buildings. Among these, the controlled mechanical ventilation (CMV) systems stand out, which are used to continuously exchange air in the rooms by extracting the stale, warm, humid air and introducing fresh, filtered, and pre-warmed renewal air.

These systems are also becoming widespread in private residences, where, typically, the air is extracted from the bathrooms and kitchen and reintroduced to living rooms.

The CMV systems generally comprise a heat recuperator that makes it possible to recuperate the heat of the exhausted air and transfer it to the renewal air.

The CMV systems exchange the air relatively slowly and, therefore, are also not very effective for the rapid elimination of odours.

### SUBJECT OF THE INVENTION

The purpose of this invention is to provide an odour extraction method that overcomes the issues of the known solutions described above.

The above-mentioned purpose is achieved with a method according to claim 1.

### BRIEF DESCRIPTION OF THE DRAWINGS

To better understand this invention, a preferred embodiment is described below, by way of non-limiting example and with reference to the attached drawings, in which:
- Figure 1 is a schematic view of a building equipped with a CMV system;
- Figure 2 is a partial cross-section of a bathroom of the building in Figure 1 comprising an extraction device for this invention;
- Figure 3 is a perspective view of an extraction box of the extraction device used in the invention;
- Figure 4 illustrates a component of Figure 3, on an enlarged scale, and in a different operating position; and
- Figure 5 is a similar cross-section to that in Figure 2 according to one embodiment of this invention.

### PREFERRED EMBODIMENT OF THE INVENTION

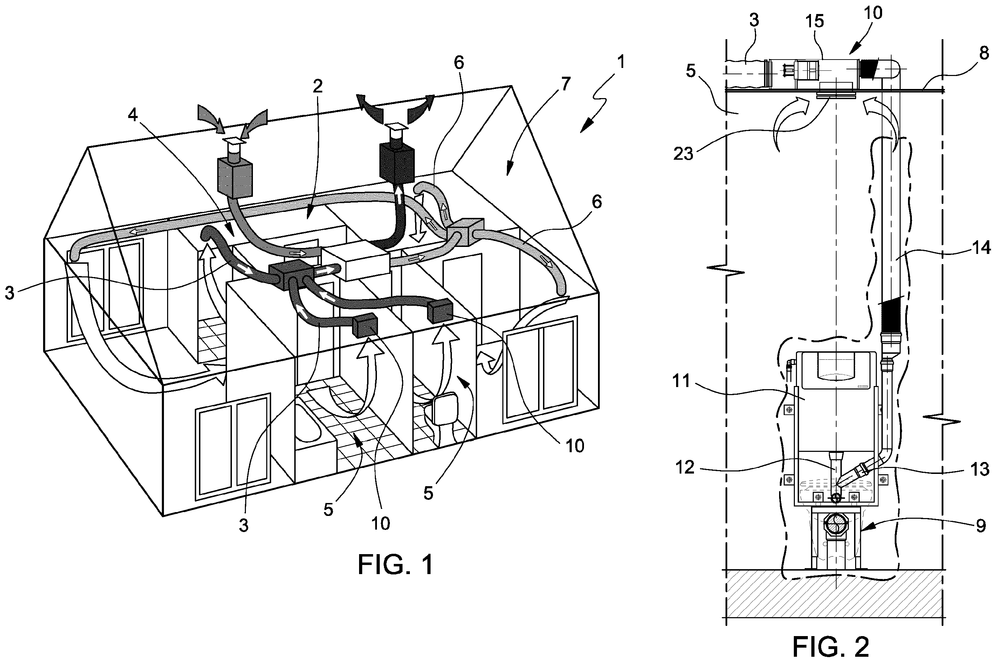

With reference to Figure 1, the reference number 1 indicates a building equipped with a centralized extraction system, for example a controlled mechanical ventilation (CMV) system 2.

The CMV system 2 comprises multiple extraction conduits 3, typically connected to a kitchen 4 and to one or more bathrooms 5 of the building 1, and multiple discharge conduits 6 connected to living rooms 7.

The CMV system 2 is not described here in more detail since it is known in itself and is not part of this invention.

With reference to Figure 2, the bathroom 5 is provided with a water closet 9 and an extraction device 10 used according to this invention, described in detail below.

The bathroom 5 also comprises a flush tank 11 connected to the water closet 9 via a discharge pipe 12.

The discharge pipe 12 is, preferably, arranged at the connection to an extraction system, and is choker-shaped and provided with a shunt 13 for a localised extraction conduit 14. In the example (not illustrated) in which the discharge pipe 12 is not arranged at the connection to an extraction system, the discharge pipe 12 may be disconnected and the choker may be applied between the lengths of pipe.

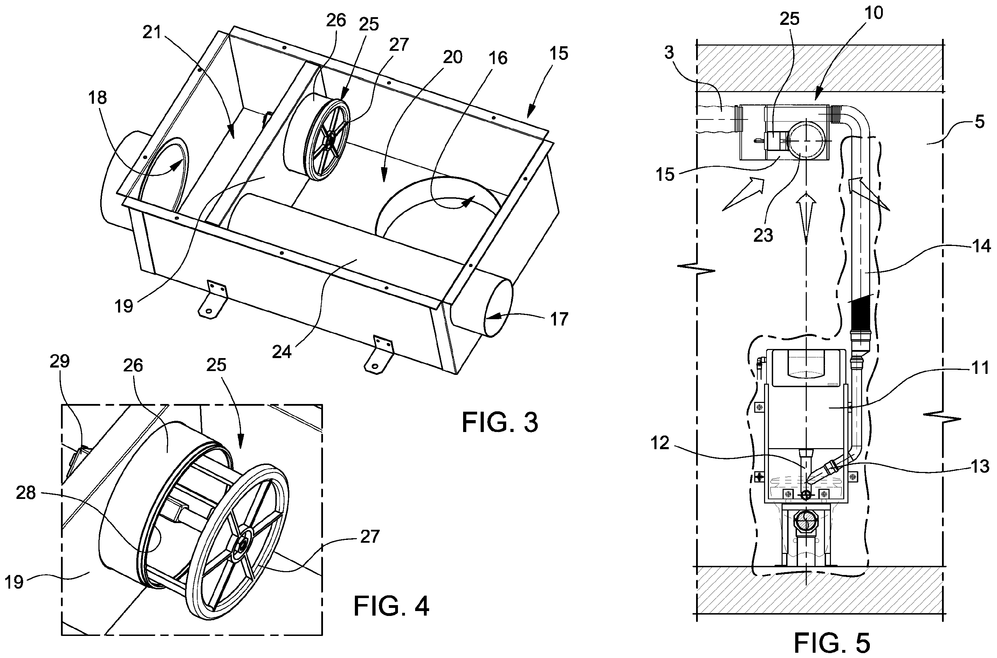

The device 10 may be installed in a false ceiling (Fig. 2) or built into the wall (Fig. 5) and comprises an extraction box 15 (Fig. 3) provided with three openings:
- a first extraction opening 16 communicating, in use, with the room (i.e., the bathroom 5);
- a second extraction opening 17 connected, in use, with the localised extraction conduit 14; and
- a discharge opening 18 connected, in use, with one of the extraction conduits 3 of the CMV system 2.

More particularly, the extraction box 15 is divided by an intermediate, transverse wall 19 into a first communicating compartment 20 and a second compartment 21. The extraction box is closed above by a lid not illustrated for clarity.

In the first extraction opening 16 of the extraction box 15 communicating with the first compartment 20 an adjustable ventilation valve 23 is housed (Fig. 2).

The discharge opening 18 opens directly into the second compartment 21. The second extraction opening 17 is arranged on a side opposite the extraction box 15 in relation to the discharge opening 18 and communicates with the second compartment 21 via a pipe coupling 24 mounted so that it passes through the wall 19.

The device 10 comprises, in addition, a switching valve 25 (Fig. 5) mounted in a tubular seat 26 that passes through the wall 19. The switching valve 25 comprises a disc check valve 27 that is designed to axially cooperate with an annular sealing edge 28 of the tubular seat 26 and is moveable between an open position illustrated in Figure 4 and a closed position illustrated in Figure 3. The switching valve 25 is controlled, for example, by a linear actuator 29. The actuator 29 may be bistable or monostable with spring return, in which case the switching valve 25 is normally open. The actuator 29 may be controlled via a bathroom light switch, a dedicated switch, or a presence or pressure sensor connected to the water closet 9.

The switching valve 25 may be inspected or extracted through the first extraction opening 16, which is suitably sized, by removing the ventilation valve 23.

The operation of the device 10 is the following.

In normal conditions, i.e., when the switching valve 25 is open, the extraction conduit 3 connected with the discharge opening 18 communicates with the first extraction opening 16 and with the second extraction opening 17. As a result, the CMV system 2 operates conventionally and continuously exchange air in the bathroom.

When the switching valve 25 is closed, as a result of someone using the bathroom, the discharge opening 18 exclusively communicates with the second extraction opening 17. Therefore, the extraction takes place in a localised way in the water closet 9. It should be noted that, during the use of the water closet 9, with the user seated on the same, the majority of the opening above the water closet 9 is obstructed by the user, thus increasing the speed of the air flow extracted and, thus, the efficacy of extraction.

From an examination of the features of the invention, the advantages that it provides compared to the prior art are clear. In particular, both in relation to conventional room extraction systems, and in relation to centralized extraction systems, such as CMV systems, localised extraction in the water closet is obtained during its use, thus enabling the rapid elimination of odours. In comparison to known room and localised extraction systems, you obtain the advantage of greater quiet and, in the case of CMV systems, power recovery of the thermal content of the expelled air. In addition, the method of the invention does not require the use of a special fan.

Finally, it is clear that changes may be made to the embodiment of the invention described, and variations produced thereto, without departing from the scope of protection defined by the claims.

For example, the switching valve 25 may be controlled in a different way.

## Claims

1. A method of extracting odours from a room including a water closet (9), comprising the steps of:
- providing an extraction device comprising:
- an extraction box (15) provided with a first extraction opening (16), a second extraction opening (17) and a discharge opening (18) communicating with the second extraction opening (17); and
- a switching valve (25) housed in the extraction box (15), interposed between the discharge opening (18) and the first extraction opening (16), and configured to selectively connect the discharge opening (18) with the first extraction opening (16) and configured to be normally open,
- connecting the first extraction opening (16) to the room;
- connecting the second extraction opening to the water closet (9) through a localized extraction conduit (14);
- connecting the discharge opening (17) to a centralized extraction system (2); and
- switching the switching valve (25) to a closed position, the centralized extraction system (2) being thereby connected to the water closet (9) only.

2. A method as claimed in claim 1, comprising the step of adjusting air flow through the first extraction opening (16) by means of an adjustable ventilation valve (23).

3. A method as claimed in any of the preceding claims, wherein the extraction box (15) comprises a first compartment (20) communicating with the first extraction opening (16) and a second compartment (21) communicating with the discharge opening (18) and with the second extraction opening (17), the switching valve (25) being interposed between the first and second compartments (20, 21).

4. A method as claimed in claim 3, wherein the extraction box (15) comprises a wall (19) separating the first compartment (20) from the second compartment (21), and wherein the switching valve (25) is mounted in a tubular seat (26) disposed through the wall (19).

5. A method as claimed in claim 4, wherein the extraction box (15) comprises a sleeve (24) connecting the second extraction opening (17) with the second compartment (21) and disposed through the wall (19)

## Patentansprüche

1. Verfahren zum Absaugen von Gerüchen aus einem Raum, der ein Wasserklosett (9) enthält, umfassend die folgenden Schritte:
- Bereitstellen einer Absaugvorrichtung, umfassend:
- einen Absaugkasten (15), der mit einer ersten Absaugöffnung (16), einer zweiten Absaugöffnung (17) und einer mit der zweiten Absaugöffnung (17) kommunizierenden Ablassöffnung (18) versehen ist; und
- ein Schaltventil (25), das in dem Absaugkasten (15) untergebracht ist, zwischen der Ablassöffnung (18) und der ersten Absaugöffnung (16) eingesetzt ist und konfiguriert ist, um die Ablassöffnung (18) selektiv mit der ersten Absaugöffnung (16) zu verbinden, und konfiguriert ist, um normalerweise offen zu sein,
- Verbinden der ersten Absaugöffnung (16) mit dem Raum;
- Verbinden der zweiten Absaugöffnung mit dem Wasserklosett (9) durch eine lokalisierte Absaugleitung (14);
- Verbinden der Ablassöffnung (17) mit einer zentralen Absauganlage (2); und
- Umschalten des Schaltventils (25) in eine geschlossene Position, wobei die zentrale Absauganlage (2) nur mit dem Wasserklosett (9) verbunden ist.

2. Verfahren nach Anspruch 1, umfassend den Schritt des Einstellens des Luftstroms durch die erste Absaugöffnung (16) mittels eines einstellbaren Belüftungsventils (23).

3. Verfahren nach einem der vorhergehenden Ansprüche, wobei der Absaugkasten (15) eine erste Kammer (20), die mit der ersten Absaugöffnung (16) kommuniziert, und eine zweite Kammer (21), die mit der Ablassöffnung (18) und mit der zweiten Absaugöffnung (17) kommuniziert, umfasst, wobei das Schaltventil (25) zwischen der ersten und der zweiten Kammer (20, 21) eingesetzt ist.

4. Verfahren nach Anspruch 3, wobei der Absaugkasten (15) eine Wand (19) umfasst, die die erste Kammer (20) von der zweiten Kammer (21) trennt, und wobei das Schaltventil (25) in einem rohrförmigen Sitz (26) montiert ist, der durch die Wand (19) angeordnet ist.

5. Verfahren nach Anspruch 4, wobei der Absaugkasten (15) eine Muffe (24) umfasst, die die zweite Absaugöffnung (17) mit der zweiten Kammer (21) verbindet und durch die Wand (19) angeordnet ist.

## Revendications

1. Procédé d'extraction des odeurs d'une pièce comprenant des toilettes (9), comprenant les étapes suivantes :
- la fourniture d'un dispositif d'extraction comprenant :
- un caisson d'extraction (15) pourvu d'une première ouverture d'extraction (16), d'une seconde ouverture d'extraction (17) et d'une ouverture d'évacuation (18) communiquant avec la seconde ouverture d'extraction (17) ; et
- une vanne de commutation (25) logée dans la boîte d'extraction (15), interposée entre l'ouverture de décharge (18) et la première ouverture d'extraction (16), configurée pour relier sélectivement l'ouverture de décharge (18) à la première ouverture d'extraction (16) et configurée pour être normalement ouverte,
- le raccordement de la première ouverture d'extraction (16) à la pièce ;
- le raccordement de la seconde ouverture d'extraction aux toilettes (9) par un conduit d'extraction localisé (14) ;
- le raccordement de l'orifice d'évacuation (17) à un système d'extraction centralisé (2) ; et
- la commutation de la vanne de commutation (25) sur une position fermée, le système d'extraction centralisé (2) étant alors raccordé uniquement aux toilettes (9).

2. Procédé selon la revendication 1, comprenant l'étape de réglage du débit d'air à travers la première ouverture d'extraction (16) au moyen d'une vanne de ventilation réglable (23).

3. Procédé selon l'une quelconque des revendications précédentes, dans lequel la boîte d'extraction (15) comprend un premier compartiment (20) communiquant avec la première ouverture d'extraction (16) et un second compartiment (21) communiquant avec l'ouverture de décharge (18) et avec la seconde ouverture d'extraction (17), la vanne de commutation (25) étant interposée entre le premier et le second compartiments (20, 21).

4. Procédé selon la revendication 3, dans lequel la boîte d'extraction (15) comprend une paroi (19) séparant le premier compartiment (20) du second compartiment (21), et dans lequel la vanne de commutation (25) est montée dans un siège tubulaire (26) disposé à travers la paroi (19).

5. Procédé selon la revendication 4, dans lequel la boîte d'extraction (15) comprend un manchon (24) reliant la deuxième ouverture d'extraction (17) au second compartiment (21) et disposé à travers la paroi (19).
